# EUROPÄISCHE PATENTANMELDUNG

(11) **EP 1 148 726 A2**
(43) Veröffentlichungstag der Anmeldung: **24.10.2001**
(21) Anmeldenummer: 01108783.0
(22) Anmeldetag: 07.04.2001
(51) Int. Cl.: H04N 7/18

(54) **Überwachungseinrichtung**

(30) Priorität: 12.04.2000 DE 10018157
(71) Anmelder: ROBERT BOSCH GMBH, 70442 Stuttgart (DE)
(72) Erfinder: Kalkbrenner, Hans-Joachim, 38667 Bad Harzburg (DE)

(57) **Zusammenfassung**

Es wird eine Überwachungseinrichtung bzw. ein Verfahren zur Videoüberwachung vorgeschlagen, das dazu dient, Bildfolgen und Standbilder mit getrennten Verfahren zu codieren. Die Bildfolgen werden mit niedriger Auflösung, während die Standbilder mit hoher Auflösung codiert werden. Das dient dazu, dass Bildfolgen einen Überblick über eine Szene verschaffen, während Standbilder zur Detailinformation dienen. Als ein Verfahren mit hoher Auflösung wird eine JPEG-Codierung verwendet. Für die niedrige Auflösung hingegen eine MPEG-Codierung. Mittels einer Bildanalyse, wobei ein Vergleich mit Referenzbildsignalen durchgeführt wird, wird bei einer Übereinstimmung eine Nachricht mittels der Kommunikationsmittel (5, 6) versendet, wobei es sich bei den Kommunikationsmitteln um eine Meldeeinrichtung handeln kann. Nach einer vorgegebenen Zeit werden abgespeicherte codierte Bildsignale mit neuen codierten Bildsignalen überschrieben.

## Beschreibung

### Stand der Technik

Die Erfindung geht aus von einer Überwachungseinrichtung bzw. einem Verfahren zur Videoüberwachung nach der Gattung der unabhängigen Patentansprüche.

Es ist bereits bekannt, dass Überwachungseinrichtungen bildgebende Vorrichtungen zur Überwachung, insbesondere Videoüberwachung, aufweisen. Dabei werden entweder Bilder oder Bildfolgen auf Speichermedien abgespeichert. Als Speichermedien wirken Filmmaterial, Magnetbänder oder Festplatten. Die Bilder bzw. Bildfolgen werden entweder in Echtzeit oder in komprimierter Form abgespeichert.

### Vorteile der Erfindung

Die erfindungsgemäße Überwachungseinrichtung bzw. das erfindungsgemäße Verfahren zur Videoüberwachung mit den Merkmalen der unabhängigen Patentansprüche haben demgegenüber den Vorteil, dass Bildfolgen mit einem ersten Verfahren und Einzelbilder nach wählbaren Abständen mit einem zweiten Verfahren codiert werden. Damit ist es vorteilhafterweise möglich, Bildfolgen, also Videosequenzen, und Standbildern entsprechende Verfahren zur Codierung zuzuweisen. Durch die Wählbarkeit, wann Einzelbilder codiert werden, wird der Aufwand an Codierung und Speicherung der codierten Daten durch einen Benutzer bestimmbar.

Durch die in den abhängigen Ansprüchen aufgeführten Maßnahmen und Weiterbildungen sind vorteilhafte Verbesserungen der in den unabhängigen Patentansprüchen angegebenen Überwachungseinrichtung bzw. Verfahren zur Videoüberwachung möglich.

Besonders vorteilhaft ist, dass durch die Verwendung eines ersten Verfahrens mit niedriger Auflösung die Bildfolgen mit einer geringeren Datenrate codiert werden als mit dem zweiten Verfahren, das eine höhere Auflösung für die Einzelbilder aufweist. Vorteilhafterweise wird für die niedrige Auflösung ein MPEG (Moving Picture Experts Group) - Verfahren, während für die hohe Auflösung ein JPEG (Joint Photographic Experts Group)-Verfahren eingesetzt wird. Damit ist es insbesondere möglich, dass zum einen mit dem ersten Verfahren ein Überblick über eine überwachte Szene verschafft wird, während mit dem zweiten Verfahren die Detailgenauigkeit von Einzelbildern hervorgehoben wird, was zur Identifikation von Gesichtern und Gegenständen geeignet ist.

Darüber hinaus ist es von Vorteil, dass durch die Verwendung von Referenzbildsignalen zu einem Vergleich mit den aufgenommenen Bildfolgen bzw. Einzelbildern eine Bilderkennung möglich ist, wobei in Abhängigkeit von einer Bilderkennung eine Nachricht mittels Kommunikationsmitteln versendet wird. Dies ist für eine Überwachungseinrichtung besonders interessant, da dann automatisch eine Warnung wegen eines Einbruchs oder eines Unfalls oder eines Brandes an eine Leitstelle oder Zentrale abgesetzt werden kann. Wird als Kommunikationsmittel eine Meldeeinrichtung wie eine Sirene oder eine Alarmleuchte eingesetzt, kann sofort am Ort der Überwachungseinrichtung ein Alarm angezeigt werden.

Weiterhin ist es von Vorteil, dass der Prozessor die Bildsignale nach einer vorgegebenen Zeit mit neuen Bildsignalen überschreibt, um in vorteilhafter Weise Speicherplatz einzusparen und den vorhandene Speicherbereich effizient zu nutzen.

Darüber hinaus ist es von Vorteil, dass die erfindungsgemäße Überwachungseinrichtung bzw. das erfindungsgemäße Verfahren in Fahrzeugen des öffentlichen Personenverkehrs eingesetzt wird. Damit wird die Sicherheit für die beförderten Personen stark erhöht, da eine Überwachung der Fahrzeuge und ein Abschreckungseffekt erzielt wird.

### Zeichnung

Ausführungsbeispiele der Erfindung sind in der Zeichnung dargestellt und werden in der nachfolgenden Beschreibung näher erläutert. Es zeigen Figur 1 eine erfindungsgemäße Überwachungseinrichtung mit einer Kamera, Figur 2 eine erfindungsgemäße Überwachungseinrichtung mit einem Signalprozessor für jedes Codierverfahren, Figur 3 die erfindungsgemäße Überwachungseinrichtung mit zwei Kameras und Figur 4 das erfindungsgemäße Verfahren zur Videoüberwachung.

### Beschreibung

In vielen Bereichen wird eine Videoüberwachung eingesetzt. Insbesondere in Fahrzeugen des öffentlichen Nahverkehrs wie Busse und Bahnen sind zu einer Erhöhung der Sicherheit der Fahrgäste Überwachungseinrichtungen vorzusehen, die Gefahren durch Personen, Brände und Unfälle überwachen und gegebenenfalls eine Meldung an eine Leitstelle absetzen. Auch eine Überwachung von verschiedenen Orten in einer Stadt ist bereits realisiert.

Für die meiste Zeit ist eine grobe Überwachung ausreichend, so dass Quellencodierverfahren, die eine sehr hohe Auflösung und Detailgenauigkeit ermöglichen, unnötig viel Aufwand an Rechenleistung und Speicherbedarf hervorrufen würden. JPEG-Verfahren weisen eine hohe Auflösung auf.

Bei JPEG wird die aufgenommen Bildinformation zunächst in Pixel, also Bildpunkte, aufgeteilt. Dann wird eine diskrete Cosinustransformation der Bildpunkte vorgenommen. Die diskrete Cosinustransformation hilft, die Bildpunkte in Gruppen von Bildpunkten von verschiedener Bedeutung aufzuteilen. Ein anschließendes Quantisieren der transformierten Bildpunkte führt zu Rundungen, die zu einem irreversiblen Datenverlust werden. Die quantisierten Daten werden dann binär codiert.

MPEG-Verfahren zeichnen sich dadurch aus, dass ein Datenstrom der Bilder und Bildfolgen in ein Bitstrom von Merkmalen umgesetzt wird. Die Merkmale sind von der Datenmenge erheblich geringer als der ursprüngliche Datenstrom, es findet also eine Kompression statt. Die Merkmale sind derart gewählt, dass das Auge und das Ohr keine wesentlichen Unterschiede wahrnehmen. Die Rücktransformation, wie aus den Merkmalen wieder ein Datenstrom von Bildern bzw. Bildfolgen wird, geben die MPEG-Verfahren an.

Erfindungsgemäß wird daher eine Überwachungseinrichtung und ein Verfahren zur Videoüberwachung verwendet, das für Bildfolgen und Einzelbilder getrennte Codierverfahren verwendet, wobei die Einzelbilder in wählbaren Abständen codiert werden. Durch einen Bildvergleich mit Referenzbildsignalen wird eine Bilderkennung realisiert, die im Falle einer Übereinstimmung mit den Referenzbildsignalen automatisch eine Nachricht mittels Kommunikationsmitteln, insbesondere von Meldeeinrichtungen, versendet.

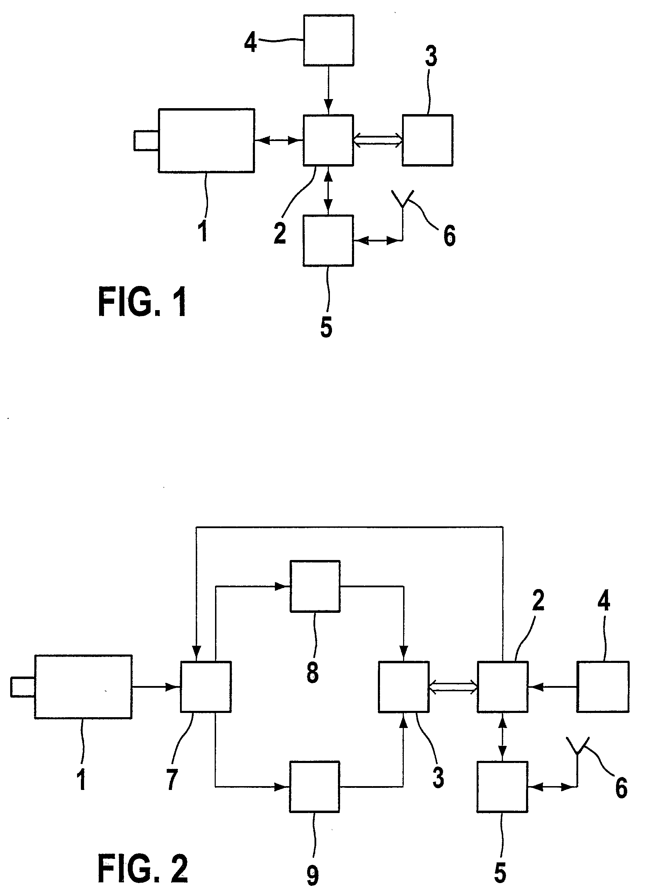

In Figur 1 ist die erfindungsgemäße Überwachungseinrichtung dargestellt. Eine Kamera 1 als bildgebende Vorrichtung ist über einen ersten Datenein-/-ausgang eines Prozessors 2 angeschlossen. Über einen zweiten Datenein-/-ausgang ist der Prozessor 2 mit einem Speicher 3 verbunden. Über einen Dateneingang ist der Prozessor 2 mit einer Uhr 4 verbunden. Über einen dritten Datenein-/-ausgang ist der Prozessor 2 an eine Sende-/Empfangsstation 5 angeschlossen. An einen zweiten Datenein-/-ausgang der Sende-/Empfangsstation 5 ist eine Antenne 6 angeschlossen.

Die Kamera 1 ist hier eine Videokamera, die zur Überwachung eines Raumes oder eines Gebietes eingesetzt wird. Es ist jedoch auch eine Wärmebildkamera als bildgebende Vorrichtung möglich, die dann Emissionen im Infrarotbereich aufnimmt und insbesondere für die Erfassung von Wärmequellen, wie es Lebewesen aber auch Feuer und Apparate mit Verlustwärme sind, geeignet ist. Die Kamera 1 weist Elektronik auf, die die aufgenommenen Bildsignale digitalisiert. Alternativ ist eine Digitalkamera möglich. Der dadurch entstandene digitale Datenstrom wird zum Prozessor 2 übertragen. Der Prozessor 2 nutzt zur Verarbeitung der Bildsignale den Speicher 3, um Bildsignale zwischenzuspeichern, da der Prozessor 2 die Bildsignale codiert.

Solch eine Codierung ist hier eine Quellencodierung, die Redundanz aus den Bildsignalen von der Kamera 1 entnimmt. Bildfolgen werden mit einem ersten Verfahren hier einem MPEG-Verfahren codiert. MPEG-Verfahren führen zu einer niedrigen Auflösung der dann abgespeicherten Bildsignale. Einzelbilder codiert der Prozessor 2 mit einem zweiten Verfahren, hier einem JPEG-Verfahren. Die codierten Bildsignale werden dann im Speicher 3 abgespeichert und mit einem Zeitstempel versehen, der mittels der Uhr 4 erzeugt wird. Die Codierung der Einzelbilder führt der Prozessor 1 nach einer vorgegebenen Zeitdauer aus, z.B. alle 15 Sekunden. Die Zeitdauer gibt an, mit welcher Genauigkeit eine Szene überwacht wird und welche Rechenleistung und Speicherbedarf dies erfordert. Nach einer vorgegebenen Zeit überschreibt der Prozessor 2 abgespeicherte Bildsignale im Speicher 3 mit neu codierten Bildsignalen.

Weiterhin führt der Prozessor 2 eine Bildanalyse durch. Die Bildanalyse wird mittels Referenzbildern durchgeführt, mittels derer Objekte in den aufgenommenen Bildsignalen erkannt werden können. Dieser Vergleich wird anhand der codierten Bildsignale durchgeführt. Mittels bekannter Korrelationsverfahren wird ein Vergleich durchgeführt, wobei ein Korrelationskoeffizient berechnet wird, der dann mit einem Schwellwert verglichen wird. Liegt der Korrelationskoeffizient über dem Schwellwert, dann ist eine Übereinstimmung erkannt. Liegt der Korrelationskoeffizient unter dem Schwellwert, dann ist keine Übereinstimmung erkannt. Wird ein Objekt erkannt, dann wird dies einer Leitstelle gemeldet. Der Prozessor 2 überträgt dafür eine Meldung mit dem erkannten Objekt zu der Sende/Empfangsstation 5, die die Meldung mittels der Antenne 6 versendet. Anstatt über Funk kann die Meldung auch über eine Leitung übertragen werden, z.B. über das Telefonnetz. Dann wird anstelle der Sende-/Empfangsstation 5 und der Antenne 6 ein Modem verwendet, das die Meldung über die Leitung überträgt. Andere Kommunikationsmittel sind eine Sirene oder eine Leuchte, die direkt mit dem Prozessor 2 über eine Signalverarbeitung verbunden sind. Sie werden als Meldeeinrichtung bezeichnet.

Der Speicher 3 weist für die aufgenommenen Bildsignale einen wiederbeschreibbaren Speicher mit geeigneter Zugriffszeit auf. Die Referenzbildsignale sind in einem nicht beschreibbaren Speicher abgespeichert, wie es z.B. eine CD-ROM ist. Alternativ können jedoch die Referenzbildsignale auch in einem besonders geschützten Bereich des wiederbeschreibbaren Speichers abgelegt sein. Der Prozessor 2 erkennt mittels der Uhr 4, wann Einzelbilder zu codieren sind.

In Figur 2 ist die erfindungsgemäße Überwachungseinrichtung dargestellt, wobei Einzelbilder und Standbilder von getrennten Signalprozessoren codiert werden.

Die Kamera 1 ist über einen Datenausgang an eine Verzweigung 7 angeschlossen. An einen zweiten Dateneingang der Verzweigung 7 ist der Prozessor 2 angeschlossen. Über einen ersten Datenausgang der Verzweigung 7 ist ein Standbildprozessor 8 an die Verzweigung 7 angeschlossen. Über einen zweiten Datenausgang der Verzweigung 7 ist ein Bewegtbildprozessor 9 angeschlossen. Ein Datenausgang des Standbildprozessors 8 führt zu einem ersten Dateneingang des Speichers 3. Ein zweiter Dateneingang des Speichers 3 ist mit dem Bewegtbildprozessor 9 verbunden. Über einen ersten Datenein-/-ausgang des Prozessors 2 ist der Speicher 3 angeschlossen. Über einen zweiten Datenein-/-ausgang des Porzessors 2 ist die Sende-/Empfangsstation 5 angeschlossen. Die Antenne 6 ist über den zweiten Datenein-/-ausgang der Sende-/Empfangsstation 5 an diese Sende-/Empfangsstation 5 angeschlossen.

Die Kamera 1 liefert digitale Bildsignale wie oben dargestellt zu der Verzweigung 7. Die Verzweigung 7 ist ein elektronischer Schalter, der von dem Prozessor 2 betätigt wird. Mit dem Schalter werden die digitalen Bildsignale entweder zu dem Standbildprozessor 8 oder dem Bewegtbildprozessor 9 geleitet. Dies hängt davon ab, wann ein Standbild aus den Bildsignalen codiert werden soll. In dem Speicher 3 sind diese Zeitdaten abgespeichert, die der Prozessor 2 dann mittels der Uhr 4 festlegt. Während der meisten Zeit wird also der Schalter 7 die digitalen Bildsignale von der Kamera 1 zu dem Bewegtbildprozessor 9 umleiten. Der Bewegtbildprozessor 9 ist ein Signalprozessor, der für eine MPEG-Codierung konstruiert ist. Damit führt der Bewegtbildprozessor 9 die MPEG-Codierung optimal durch. Die codierten Daten speichert der Bewegtbildprozessor 9 dann im Speicher 3 ab. Soll ein Standbild codiert werden, dann lenkt der Schalter 7 auf ein Signal des Prozessors 2 den digitalen Datenstrom zu dem Standbildprozessor 8 um, der die digitalen Bildsignale mittels eines JPEG-Verfahrens codiert, so dass ein hochaufgelöstes Bild entsteht. Auch der Standbildprozessor 8 speichert dann die codierten Bildsignale in dem Speicher 3 ab. Die digitalen Bildsignale von der Kamera 1 sind hier in Rahmen codiert, wobei der Schalter 7 von dem Prozessor 2 in Abhängigkeit von den Rahmen geschaltet wird, so dass nur ganze Rahmen zu dem Standbildprozessor 8 oder dem Bewegtbildprozessor 9 übertragen werden. Der Bewegtbildprozessor 9 und der Standbildprozessor 8 überschreiben nach einer vorgegebenen Zeit abgespeicherte codierte Bildsignale mit neuen codierten Bildsignalen.

Der Prozessor 2 führt eine Bildanalyse der abgespeicherten Bildsignale mittels Referenzbildsignalen wie oben dargestellt durch. Den abgespeicherten Bildsignalen fügt der Prozessor 2 einen Zeitstempel hinzu. Erkennt der Prozessor 2 in den abgespeicherten Bildsignalen Objekte, dann meldet der Prozessor 2 dies mittels der Sende-/Empfangsstation 5 und der Antenne 6 als Kommunikationsmittel einer Leitstelle. Der Schalter 7, der Standbildprozessor 8 und der Bewegtbildprozessor 9 können gemeinsam auf einer Karte realisiert sein, die in einen Computer gesteckt wird, wobei an die Karte die Kamera 1 angeschlossen wird. Der Standbildprozessor 8 und der Bewegtbildprozessor 9 können auch auf dem Prozessor 2 als Softwaremodule implementiert sein. Hier sind die beiden Prozessoren jedoch jeweils als ein separater Signalprozessor vorhanden. Auch die Verwendung eines einzelnen Prozessors für beide Aufgaben ist möglich.

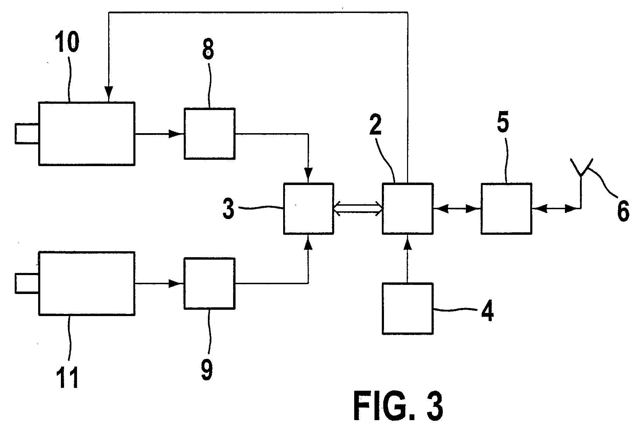

In Figur 3 ist die erfindungsgemäße Überwachungseinrichtung dargestellt, wobei hier zwei Kameras verwendet werden. Eine Kamera wird für Aufnahmen von Bildfolgen insbesondere für Bewegtbilder verwendet, und eine weitere Kamera wird für die Aufnahme von Standbildern eingesetzt. Eine Standbildkamera 10 ist an den Standbildprozessor 8 über einen Dateneingang des Standbildprozessors 8 angeschlossen. Der Standbildprozessor 8 liefert Signale zu einem ersten Dateneingang des Speichers 3. Eine Bewegtbildkamera 11 ist an einen Dateneingang des Bewegtbildprozessors 9 angeschlossen. An einen zweiten Dateneingang des Speichers 3 ist der Bewegtbildprozessor 9 angeschlossen. Über einen ersten Datenein-/-ausgang des Prozessors 2 ist der Speicher 3 angeschlossen. Über einen ersten Dateneingang des Prozessors 2 ist die Uhr 4 mit dem Prozessor 2 verbunden. Über seinen zweiten Datenein-/-ausgang ist der Prozessor 2 mit der Sende-/Empfangsstation 5 verbunden. Über ihren zweiten Datenein-/-ausgang ist die Sende-/Empfangsstation 5 mit der Antenne 6 verbunden. Über einen Datenausgang des Prozessors 2 ist die Standbildkamera 10 angeschlossen.

Der Prozessor 2 steuert über seinen Datenausgang die Kamera 10, so dass die Standbildkamera 10 nur dann Bildsignale aufnimmt, wenn der Prozessor 2 das Signal dazu gibt. Die Standbildsignale werden dann dem Standbildprozessor 8 übergeben, der mittels eines JPEG-Verfahrens die Standbildsignale codiert und dann im Speicher 3 abspeichert. Die Bewegtbildkamera 11 liefert dauernd Bildsignale an den Bewegtbildprozessor 9, der eine MPEG-Codierung an den Bewegtbildsignalen durchführt. Der Bewegtbildprozessor 9 schreibt dann die codierten Bildsignale in den Speicher 3.

Der Prozessor 2 fügt einerseits den abgespeicherten codierten Bildsignalen einen Zeitstempel zu, der mittels der Uhr 4 ermittelt wird und andererseits führt der Prozessor 2 wie oben dargestellt eine Bildanalyse mittels Referenzbildsignalen durch, um im Falle von erkannten Objekten eine Meldung mittels der Kommunikationsmittel der Sende-/Empfangsstation 5 und der Antenne 6 abzusetzen. Auch hier kann die Sende-/Empfangsstation 5 und die Antenne 6 durch ein Modem ersetzt werden, falls eine leitungsgebundene Kommunikationsverbindung vorliegt.

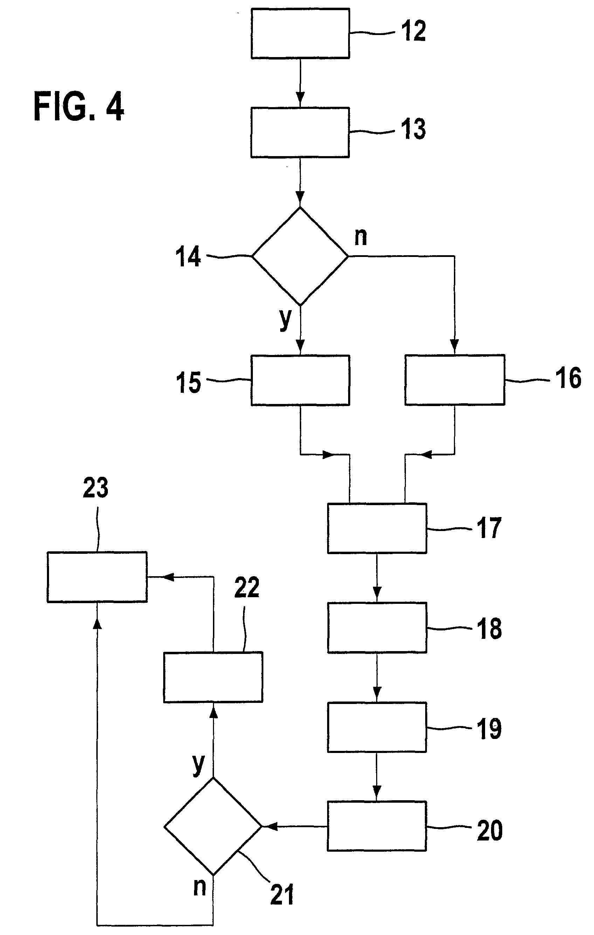

In Figur 4 ist das erfindungsgemäße Verfahren zur Videoüberwachung dargestellt. In Verfahrensschritt 12 beginnt das erfindungsgemäße Verfahren. In Verfahrensschritt 13 wird mittels einer bildgebenden Vorrichtung einer Kamera, wie oben dargestellt, Bildsignale aufgenommen und von der Kamera digitalisiert. In Verfahrensschritt 14 wird festgestellt, ob ein Bewegtbild abgespeichert werden soll oder nicht. Ist das der Fall, dann wird in Verfahrensschritt 15 eine MPEG-Codierung mit niedriger Auflösung durchgeführt. In Verfahrensschritt 17 werden dann die codierten Bildsignale abgespeichert. Soll jedoch ein Standbild codiert werden, dann wird in Verfahrensschritt 16 anstatt von Verfahrensschritt 15 eine JPEG-Codierung durchgeführt, um dann auch die codierten Bildsignale nach JPEG in Verfahrensschritt 17 abzuspeichern. In Verfahrensschritt 18 wird den abgespeicherten Daten ein Zeitstempel hinzugefügt. In Verfahrensschritt 19 wird eine Bildanalyse mittels Referenzbildsignalen durchgeführt, um Objekte in den abgespeicherten Bildsignalen zu erkennen. In Verfahrensschritt 20 wird dann dieser Vergleich durchgeführt. In Verfahrensschritt 21 wird festgestellt, ob eine Übereinstimmung vorliegt oder nicht. Wie oben dargestellt wird dabei ein Korrelationskoeffizient verwendet. Liegt eine Übereinstimmung vor, dann wird in Verfahrensschritt 22 eine Meldung an eine Leitstelle versendet. Damit endet dann das Verfahren in Verfahrensschritt 22. Wird keine Übereinstimmung festgestellt, dann endet das Verfahren in Verfahrensschritt 23.

Das erfindungsgemäße Verfahren bzw. die erfindungsgemäße Überwachungseinrichtung wird vorteilhafterweise in Fahrzeugen des öffentlichen Personenverkehrs verwendet, um dort die Sicherheit wesentlich zu erhöhen. In diesen Fahrzeugen wird die Anzahl der Kameras pro Fahrzeug typischerweise zwischen vier und sechs liegen.

## Patentansprüche

1. Überwachungseinrichtung, wobei die Überwachungseinrichtung wenigstens eine bildgebende Vorrichtung (1, 10, 11), wenigstens einen Prozessor (2, 8, 9) einen Speicher (3) und Kommunikationsmittel (5, 6) aufweist, dadurch gekennezeichnet, dass der wenigstens eine Prozessor (2, 8, 9) derart ausgebildet ist, dass der Prozessor (2, 8, 9) Bildsignale von Bildfolgen von der wenigstens einen bildgebenden Vorrichtung (1, 10, 11) mit einem ersten Verfahren codiert und in wählbaren Zeitabständen die Bildsignale von einem Bild mit einem zweiten Verfahren codiert.

2. Überwachungsvorrichtung nach Anspruch 1, **dadurch gekennzeichnet, dass** der wenigstens eine Prozessor (2, 8, 9) als das erste Verfahren ein Verfahren mit niedriger Auflösung zur Codierung der Bildsignale und als das zweite Verfahren ein Verfahren mit hoher Auflösung zur Codierung der Bildsignale des einen Bildes verwendet.

3. Überwachungsvorrichtung nach Anspruch 2, **dadurch gekennzeichnet, dass** der wenigstens eine Prozessor (2, 8, 9) als das erste Verfahren eine MPEG-Codierung und als das zweite Verfahren eine JPEG-Codierung verwendet.

4. Überwachungsvorrichtung nach einem der vorhergehenden Ansprüche, **dadurch gekennzeichnet, dass** der wenigstens eine Prozessor (2, 8, 9) derart ausgebildet ist, dass der wenigstens eine Prozessor (2, 8, 9) die Bildsignale mit Referenzbildsignalen vergleicht und in Abhängigkeit von dem Vergleich eine Nachricht mittels der Kommunikationsmittel (5, 6) versendet.

5. Überwachungsvorrichtung nach Anspruch 4, **dadurch gekennzeichnet, dass** die Kommunikationsmittel als Meldeeinrichtung ausgebildet sind.

6. Überwachungsvorrichtung nach einem der vorhergehenden Ansprüche, **dadurch gekennzeichnet, dass** der wenigstens eine Prozessor (2, 8, 9) derart ausgebildet ist, dass der Prozessor (2, 8, 9) abgespeicherte Bildsignale nach einer vorgegebenen Zeit mit neuen Bildsignalen überschreibt.

7. Verwendung der Überwachungseinrichtung nach einem der vorhergehenden Ansprüche, **dadurch gekennzeichnet, dass** die Überwachungseinrichtung in Fahrzeugen des öffentlichen Personenverkehrs eingesetzt wird.

8. Verfahren zur Videoüberwachung, wobei eine Szene mittels aufgenommener Bildsignale videoüberwacht wird, wobei die Bildsignale codiert werden, wobei die codierten Bildsignale abgespeichert werden, wobei gegebenenfalls eine Nachricht in Abhängigkeit von den Bildsignalen versandt wird, **dadurch gekennzeichnet, dass** die Bildsignale mit einem ersten Verfahren codiert werden und dass in wählbaren Zeitabständen die Bildsignale eines Bildes mit einem zweiten Verfahren codiert werden.

9. Verfahren nach Anspruch 8, **dadurch gekennzeichnet, dass** mit dem ersten Verfahren mit niedriger Auflösung codiert wird und dass mit dem zweiten Verfahren mit hoher Auflösung codiert wird.

10. Verfahren nach Anspruch 9, **dadurch gekennzeichnet, dass** als das erste Verfahren ein MPEG-Verfahren und als das zweite Verfahren ein JPEG-Verfahren eingesetzt wird.

11. Verfahren nach einem der Ansprüche 8 bis 10, **dadurch gekennzeichnet, dass** die Bildsignale mit Referenzbildsignalen verglichen werden und dass in Abhängigkeit von dem Vergleich eine Nachricht versandt wird.

12. Verfahren nach einem der Ansprüche 8 bis 11, **dadurch gekennzeichnet, dass** abgespeicherte Bildsignale nach einer vorgegebenen Zeit mit neuen Bildsignalen überschrieben werden.

13. Verwendung des Verfahrens zur Videoüberwachung nach einem der Ansprüche 8 bis 12, **dadurch gekennzeichnet, dass** das Verfahren in Fahrzeugen des öffentlichen Personenverkehrs eingesetzt wird.
